(19) Europäisches Patentamt

European Patent Office

Office européen des brevets

(11) Publication number: **0 325 567 B1**

(12) **EUROPEAN PATENT SPECIFICATION**

(45) Date of publication of patent specification: **15.12.93**

(51) Int. Cl.5: **H01M 4/92**, B01J 23/42, B01J 35/10

(21) Application number: **89830020.7**

(22) Date of filing: **20.01.89**

(54) **Process for preparing an electrocatalyst.**

(30) Priority: **22.01.88 JP 12405/88**

(43) Date of publication of application:
**26.07.89 Bulletin 89/30**

(45) Publication of the grant of the patent:
**15.12.93 Bulletin 93/50**

(84) Designated Contracting States:
**DE GB IT**

(56) References cited:
EP-A- 0 002 651     DE-A- 2 835 629
GB-A- 2 024 868     GB-A- 2 190 537
US-A- 3 953 368     US-A- 4 044 193

JOURNAL OF THE ELCTROCHEMICAL SOCI-
ETY, ELECTROCHEMICAL SCIENCE AND
TECHNOLOGY, vol. 122, no. 10, October 1975,
pages 1279-1287; H.R. KUNZ et al.: "The cata-
lytic activity of platinum supported on car-
bon for electrochemical oxygen reduction in
phosphoric acid"

(73) Proprietor: **TANAKA KIKINZOKU KOGYO K.K.**
**6-6, Kayaba-CHO**
**2-chome, Nihonbashi**
**Chuo-ku Tokyo 103(JP)**

Proprietor: **Watanabe, Masahiro**
**2-10, Kitashin 1-chome**
**Kofu-shi Yamanashi(JP)**

Proprietor: **Stonehart, Paul**
**P.O. Box 1220**
**Madison Connecticut 06433(US)**

(72) Inventor: **Watanabe, Masahiro**
**No. 2-10, Kitashin 1-chome**
**Kofu-shi Yamanashi(JP)**
Inventor: **Stonehart, Paul**
**P.O. Box 1220**
**Madison Conneticut 06443(US)**
Inventor: **Tsurumi, Kazunori**
**No. 2-37, Minamiazabu 5-chome**
**Minato-Ku Tokyo(JP)**

JOURNAL OF THE ELECTROCHEMICAL SOCIETY, vol. 133, no. 5, May 1986, pages 944-947, Manchester, NH, US; M. PEUCKERT et al.: "Oxygen reduction on small supported platinum particles"

JOURNAL OF THE ELECTROCHEMICAL SOCIETY: ELECTROCHEMICAL SCIENCE, vol. 115, no. 12, December 1968, pages 1218-1224; E.J. CAIRNS et al.: "Electrocatalysts for the direct electrochemical oxidation of n-Octane in fuel cells"

JOURNAL OF THE ELECTROCHEMICAL SOCIETY, vol. 127, no. 6, June 1980, pages 1219-1224, Manchester, US; G.A. GRUVER et al.: "Surface area loss of platinum supported on carbon in phosphoric acid electrolyte"

(74) Representative: **Pellegri, Alberto et al**
**c/o Società Italiana Brevetti S.p.A.**
**Via Puccini, 7**
**I-21100 Varese (IT)**

**EP 0 325 567 B1**

**Description**

The present invention relates to the preparation of an electrocatalyst which can be employed in various electrolysis reactions, especially which is capable of obtaining higher reaction activity for oxygen reduction with a lesser amount of the catalyst metal in a liquid or solid polymer- or solid electrolyte-type fuel cell in which an oxygen reduction reaction occurs as a cathode reaction.

As one means for obtaining higher reaction or electricity-generating efficiency with a lesser amount of such an electrocatalyst as platinum in various electrode reactions including one in a liquid or solid electrolyte-type fuel cell, the research for elevating the cathode catalyst activity has been heretofore carried out. What has been researched for elevating the mass activity (activity per unit catalyst metal particles) of the platinum until now is how to make the specific surface area of the platinum supported on such a support as electro-conductive carbon powders ($m^2$/Pt-g) larger. To make the particle size of the supported platinum particles smaller or to add a second and a third element is a concrete method thereof, which intends to elevate the mass activity of the platinum .

US-A-4,044,193 and EP-A-0 002 651 are both prior art documents that disclose a method of preparing a catalyst by depositing colloidal particles of a catalyst onto a support, typically a carbon support. Although, however, the effect of the activity elevation by the reduction of the particle size of the active metal is expected to be elevated as the particle size becomes smaller, a certain limit in fact exists and the mass activity is known to be adversely lowered when the surface area of the active metal is further increased beyond a certain value (L. Bregoli; Electrochim. Acta 23 (1978) 489).

Although, also in a platinum alloy catalyst the mass activity elevation has been intended by making the specific surface area larger by means of reduction of the particle size of the platinum particles supported, it has the limit as the platinum catalyst does.

The said phenomenon which has not been avoided is called "loss of mass activity" which is a large barrier especially against the mass activity elevation of the platinum. Although, in order to elevate the potential of the oxygen electrode of a fuel cell, for example, the surface area is increased not by reducing the active metal particle size, but by increasing the platinum amount with the sacrifice of profitability, it is technically difficult in this case to support the platinum particles having the particle size near the limit in which the activity loss may occur on the support by reason of platinum loading. When the amount of a support catalyst forming an electrode reaction layer is increased to increase the platinum surface area in order to achieve the same object, the reaction layer becomes too thick to elevate the performance so that there arises a problem that the expected gas permeation efficiency cannot be achieved.

An object of this invention is to provide an electrocatalyst which elevates the mass activity of platinum and the like especially in a fuel cell.

Another object of the invention is to provide an electrocatalyst substantially free from the mass activity loss.

The present invention is a process for preparing an electrocatalyst comprising an electroconductive carbon support and active catalyst metal particles supported thereon, which comprises applying to said carbon support having a known specific surface area an active metal catalyst in the form of preformed colloidal particles having a known average diameter and a known density while ensuring a resulting average interparticle distance of the catalyst metal particles on the support comprised between 15 nm and 27 nm.

The average interparticle distance of the active catalyst metals supported on the support of the electrocatalyst according to the present invention can be set optionally by adjusting the specific surface area of the support, the amount of the supported catalyst metals.

The overlapping of the territories around the particles between the adjacent particles diminishes thereby so that the desired activity value can be obtained without the decrease of the specific activity even when the particle diameter of the catalyst particles is considerably decreased.

Brief Description of the Drawings

Fig. 1 is a schematic view showing the relation of the catalyst metal particles on the surface of the support;

Fig. 2 is a graph showing the relation between the surface area of the platinum particles supported on the various carbon black by mean of the colloid method and the surface area of the carbon black support; and

Fig. 3 is a graph showing the relation between the interparticle distance of the platinum particles supported on the carbon catalyst and the specific activity of the catalyst in the Example.

## Detailed Description of the Invention

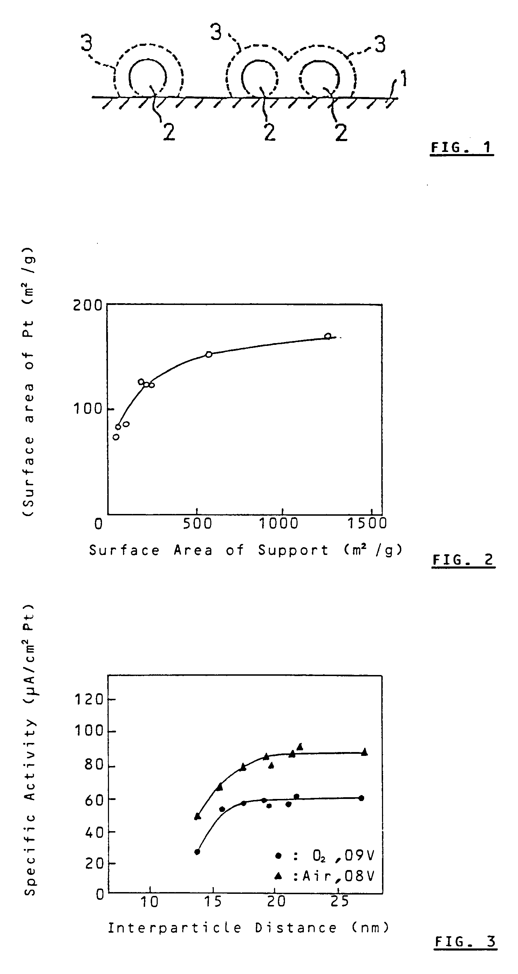

The basic concept of this invention will be exemplified referring, to Fig. 1. Catalyst metal particles 2 which are platinum particles in the drawing supported on the surface of a support 1 have an inactive area near the surface of the support 1 (dotted line portion) and an active area opposite to the surface of the support 1 (solid line portion).

While in general the activity of a catalyst is elevated by increasing the amount of catalyst metal particles supported to increase the number of active sites, oxygen to be reduced, for example, in case of the cathode of a fuel cell is required to diffuse and reach the surface of the support. Each catalyst metal particle supported has an area called territory 3 extending beyond its substantial size, and the oxygen reaches the surface of the catalyst metal particles through the territory (which is a thin area). Although, therefore, the overall activity has a tendency to increase by increasing the amount of the catalyst metal particles supported, the territories 3 of each catalyst metal particle are overlapped due to the excess of the particles so that the active area decreases. It is accordingly anticipated that the activity per the unit catalyst metal particle (mass activity) does not increase after it reaches a certain value, and in some instances it decreases.

Fig. 2 is a graph showing the dependency of the specific surface area variation of a platinum crystallite on the BET specific surface area of various carbons. The graph shows that the carbon having a larger surface area gives a better dispersion of the platinum crystallite, that is, 170 $m^2$/g-Pt. It is not surface conditions but a specific surface area which is important for obtaining highly dispersed catalyst metal particles.

Fig. 3 which is the result of the below Example shows the relation between a specific surface area of various carbon catalysts having various specific surface areas supporting platinum particles on their surfaces and an interparticle distance of the platinum particles in the case that the catalysts are employed as those for oxygen reduction on the cathode (air electrode or oxygen electrode) of a fuel cell. The graph shows that the activity per the unit surface area of the platinum increases rather steeply with the increase of the interparticle distance, up to about 15 nm and more gradually thereafter and the activity reaches the maximum value at about 17 nm in case of oxygen and at 20 nm in case of air, respectively. A further increase of the interparticle distance scarcely influences the specific activity that starts to decrease when the interparticle distance becomes larger than about 27 nm. In other words, the specific activity of the platinum reaches the maximum value at around 17 to 20 nm, and the specific activity can be maintained nearly constant by increasing the interparticle distance beyond that value and up to about 27 nm.

The said interparticle distance can be set optionally by adjusting the specific surface area of the support, the particle diameter of the catalyst metal and the supported amount thereof.

In the present invention, the electrocatalyst having the desired activity value can be obtained by increasing the interparticle distance of the catalyst metal particles, especially the platinum or platinum alloy particles, beyond the value employed in the prior art without decrease of the specific activity even when the particle diameter of the catalyst metal particles is considerably decreased.

The invention will now be illustrated by an Example, which, however, is to be considered as merely exemplary of practice of the invention, and not as delimitive thereof.

## Example

As a catalyst support, acetylene black (particle diameter: about 10 to 50 m$\mu$; surface area: about 60 to 800 $m^2$/g) and furnace black (particle diameter: about 10 to 30 m$\mu$; surface area: about 200 to 1400 $m^2$/g) were employed without further treatment or after heat treatment. 10 % of platinum colloid was supported to each 10 g of respective these eight different supports to prepare respective two platinum supported carbon catalysts for the eight supports each having an interparticle distance of about 13.7, 15.6, 17.5, 19.2, 19.7, 21, 21.6 and 27 nm. The interparticle distance was calculated according to the following equation on the assumption that the catalyst particles were regularly arranged on the surface of the carbon support in the closest packing.

$$x = \sqrt{\pi\ \sigma\ d^3\ Sc\ (100 - y)\ /\ 3\sqrt{3}\ y} \quad (nm)$$

Wherein,

$\sigma$ : density of the catalyst metal particles (unit:g/$nm^3$)

4

EP 0 325 567 B1

d: average diameter of the catalyst metal particles (unit:nm)
Sc: specific surface area of the carbon support (unit:nm²/g)
y: % by weight of the supported catalyst metal on the carbon support

The platinum particles were observed to be uniformly dispersed on the support, and the interparticle distance was confirmed by TEM.

The respective carbon supports were formed into a gas permeable electrode for oxygen reduction in a fuel cell with 30 % by weight of polytetrafluoroethylene by mean of a hot-press method. The reduction activity of pure oxygen was measured with one of the above two catalysts and that of oxygen in air with the other catalyst at one atmosphere, 190 °C and at a constant voltage (0.9 V for the pure oxygen and 0.8 V for air) employing 100% phosphoric acid as an electrolyte. The result was shown in the graph of Fig. 3 and the below Table.

TABLE

| Interparticle Distance (nm) | 13.7 | 15.6 | 17.5 | 19.2 | 19.7 | 21.0 | 21.6 | 27.0 |
|---|---|---|---|---|---|---|---|---|
| Spec. Activity ($\mu$A/cm²-Pt, O$_2$) | 48 | 69 | 79 | 84 | 75 | 82 | 88 | 83 |
| Spec. Activity ($\mu$A/cm²-Pt,air) | 25 | 51 | 56 | 58 | 54 | 54 | 60 | 58 |

**Claims**

1. A process of preparing an electrocatalyst comprising an electroconductive carbon support and active catalyst metal particles supported thereon, which comprises applying to said carbon support having a known specific surface area an active metal catalyst in the form of preformed colloidal particles having a known average diameter and a known density while ensuring a resulting average interparticle distance of the catalyst metal particles on the support comprised between 15 nm and 27 nm.

2. A process as defined in claim 1, wherein said resulting average interparticle distance is determined by applying a percent by weight of said active metal catalyst on said carbon support as derived from the following equation

$$x = \sqrt{\pi \sigma d^3 Sc (100 - y) / 3\sqrt{3}\, y} \quad (nm)$$

where
$\sigma$: density of said active metal catalyst particles (unit:g/nm³)
d: average diameter of the catalyst metal particles (unit:nm)
Sc: specific surface area of said carbon support (unit: nm²/g)
y: percent by weight of supported active metal catalyst on said carbon suppport.

3. The process as claimed in claim 1, wherein the active catalyst metal particles are platinum or a platinum alloy.

4. The process as claimed in claim 1, wherein the catalyst is employed for a fuel cell of liquid, solid polymer or solid electrolyte type.

**Patentansprüche**

1. Verfahren zur Herstellung eines Elektrokatalysators mit einem elektrisch leitfähigen Kohlenstoffträger und darauf getragenen Teilchen eines aktiven Katalysatormetalls, aufweisend das Aufbringen eines aktiven Metallkatalysators in der Form vorgeformter, kolloidaler Teilchen mit bekanntem mittleren Durchmesser und bekannter Dichte auf den Kohlenstoffträger mit bekannter spezifischer Oberfläche, während man einen resultierenden mittleren Zwischen-Teilchen-Abstand der Katalysatormetallteilchen auf dem Träger von zwischen 15 nm und 27 nm sicherstellt.

5

**2.** Verfahren gemäß Anspruch 1, bei dem der resultierende mittlere Zwischen-Teilchen-Abstand bestimmt wird durch Aufbringen eines Gewichtsprozentsatzes des aktiven Metallkatalysators auf den Kohlenstoffträger, wie er hergeleitet wird aus der folgenden Gleichung

$$x = \sqrt{\pi\, \sigma\, d^3\, Sc\, (100 - y) / 3\sqrt{3}\, y}\quad (nm)$$

worin

$\sigma$: Dichte der Teilchen des aktiven Metallkatalysators (Einheit: g/nm$^3$)
d: Mittlerer Durchmesser der Katalysatormetallteilchen (Einheit: nm)
Sc: Spezifische Oberfläche des Kohlenstoffträgers (Einheit: nm$^2$/g)
y: Gewichtsprozentsatz des getragenen aktiven Metallkatalysators auf dem Kohlenstoffträger.

**3.** Verfahren wie in Anspruch 1 beansprucht, bei dem die Teilchen des aktiven Katalysatormetalls Platin- oder eine Platinlegierung sind.

**4.** Verfahren wie in Anspruch 1 beansprucht, bei dem der Katalysator für - eine Brennstoffzelle vom Flüssig-, Festpolymer- oder Festelektrolyt-Typ verwendet wird.

**Revendications**

**1.** Procédé de préparation d'un électrocatalyseur comprenant un support de charbon électroconducteur et des particules d'un catalyseur metallique actif supportées sur ledit support, lequel comprends l'application audit support de charbon, ayant une surface spécifique connue, d'un catalyseur métallique en forme de particules colloïdales préformées ayant un diamètre moyen connu et une densité connue, tout en assurant une distance interparticulaire moyenne résultante des particules du catalyseur métallique sur le support comprise entre 15 nm et 27 nm.

**2.** Procédé comme defini dans la revendication 1, dans lequel ladite distance interparticulaire moyenne résultante est déterminée par l'application d'un pourcentage en poids dudit catalyseur métallique actif sur ledit support de charbon comme dérivé de l'équation suivante:

$$x = \sqrt{\pi\, \sigma\, d^3\, Sc\, (100 - y) / 3\sqrt{3}\, y}\quad (nm)$$

où

$\sigma$: densité desdites particules actives du catalyseur métallique (unité: g/nm$^3$)
d: diamètre moyen des particules du catalyseur métallique (unité: nm)
Sc: surface spécifique dudit support de charbon (unité:nm$^2$/g)
y: pourcentage en poids du catalyseur métallique supporté sur ledit support de charbon.

**3.** Procédé come revendiqué dans la revendication 1, dans lequel les particules du catalyseur métallique actif sont de platine on d'un alliage de platine.

**4.** Procédé comme revendiqué dans la revendication 1, dans lequel le catalyseur est employé pour une pile à combustible du type à polymère liquide, solide ou à électrolyte solide.

FIG. 1

FIG. 2

FIG. 3